# EUROPEAN PATENT APPLICATION

(11) **EP 4 570 424 A1**
(43) Date of publication of application: **18.06.2025**
(21) Application number: 23887182.6
(22) Date of filing: 05.12.2023
(51) Int. Cl.: B23P 19/06, B23P 19/00, H01M 6/00, H01M 10/04, B25B 21/00

(54) **MATERIAL ASSEMBLING METHOD AND SYSTEM**

(30) Priority: 10.10.2023 CN 202311304144
(71) Applicant: Contemporary Amperex Technology (Hong Kong) Limited, Central, Central And Western District (HK)
(72) Inventor: SUN, Yanlin, Ningde Fujian 352100 (CN); SUN, Zhiqiang, Ningde Fujian 352100 (CN); XIA, Yijun, Ningde Fujian 352100 (CN); QIU, Shiping, Ningde Fujian 352100 (CN); CHEN, Fanke, Ningde Fujian 352100 (CN); GONG, Xueqing, Ningde Fujian 352100 (CN)
(74) Representative: Holt, Lucy Rose
(86) International application number: PCT/CN2023/136364
(87) International publication number: WO 2025/076962

(57) **Abstract**

The present application provides a material assembly method and system. The material assembly system includes a control device, a material cabinet, a socket selector, a host computer, and a tightening gun controller. The control device, when receiving target material picking information sent by the host computer, controls the material cabinet to open a target cabinet door according to the target material picking information to indicate taking a target material away, and controls the socket selector to perform target socket indication processing. A cabinet body corresponding to the target cabinet door includes the target material. The control device, when determining that the target socket has been taken away, enables the tightening gun controller, or when determining that the target socket has not been taken away, does not enable the tightening gun controller. The tightening gun controller, when enabled, executes assembly processing of the target material through the target socket if a tightening trigger instruction is received. Therefore, the accuracy of material assembly can be effectively improved.

## Description

### Cross-Reference to Related Application

The present application is filed based on the Chinese patent application No. 202311304144.1 filed on October 10, 2023, and claims the priority of this Chinese patent application, the entire content of which is hereby incorporated into the present application as a reference.

### Technical Field

The present application relates to the field of battery technologies, and in particular, to a material assembly method and system.

### Background

At present, with the development of the lithium battery industry, a battery pack assembly line often requires mixed-line production for multiple products, which is highly prone to manual assembly errors. Therefore, how to improve assembly accuracy is currently an issue to be solved.

### Summary of the Invention

Embodiments of the present application provide a material assembly method and system, which can effectively improve the accuracy of material assembly.

Technical solutions of the embodiments of the present application are realized as follows.

In a first aspect, an embodiment of the present application provides a material assembly method, which is applied to a material assembly system. The material assembly system includes a control device, a material cabinet, a socket selector, a host computer, and a tightening gun controller. The method includes:
when receiving, by the control device, target material picking information sent by the host computer, controlling the material cabinet to open a target cabinet door according to the target material picking information to indicate taking a target material away, and controlling the socket selector to perform target socket indication processing, wherein the target socket indication processing is used to indicate a target container in the socket selector, the target socket is stored in the target container, and a cabinet body corresponding to the target cabinet door includes the target material;
when determining, by the control device, that the target socket has been taken away, enabling the tightening gun controller;
executing, by the tightening gun controller when enabled, assembly processing of the target material through the target socket if a tightening trigger instruction is received;
and when determining, by the control device, that the target socket has not been taken away, not enabling the tightening gun controller.

In this embodiment, the control device of the material assembly system may determine the target cabinet door and the target socket according to the target material picking information sent by the host computer, may thus control the material cabinet to automatically open the target cabinet door, a material behind the target cabinet door being the correct target material, and may thus indicate taking the correct material away. At the same time, the target socket indication processing is performed to indicate taking the correct target socket away, the target socket being the correct socket used when assembling the target material. In turn, the control device may further judge whether the target socket has been taken away. Only when the target socket has been taken away, will the tightening gun controller be enabled to complete assembly of the target material based on the tightening gun controller. Accordingly, accurate picking and assembly of the material may be achieved, greatly improving accuracy of material assembly, and thereby improving assembly efficiency. Additionally, if the control device determines that the target socket has not been taken away, for example, a socket that is taken away is not the target socket, i.e., when the socket is incorrectly taken away, the control device will not enable the tightening gun controller and the assembly of the material then cannot be completed through the tightening gun controller. This can effectively increase the accuracy of socket picking. And when the tightening gun controller is enabled and receives a tightening trigger instruction, assembly processing of the target material may be executed through the target socket, improving efficiency of material assembly.

In some embodiments of the present application, the material assembly system includes a tightening gun and a tightening gun controller, and executing assembly processing of the target material through the target socket includes:
controlling the tightening gun to drive the target socket to complete the assembly processing of the target material, wherein the tightening gun is connected to the target socket.

In this embodiment, when the tightening gun controller completes the assembly processing of the target material, the tightening gun is controlled by the tightening gun controller to drive the target socket connected to the tightening gun, so as to complete assembly of the target material based on the target socket, improving material assembly efficiency.

In some embodiments of the present application, the target material includes a target screw and a target workpiece, the target socket is connected to the target screw, and controlling the tightening gun to drive the target socket to complete the assembly processing of the target material includes:
completing the assembly processing of the target material by controlling the tightening gun to drive the target socket to execute a tightening operation between the target screw and the target workpiece.

In this embodiment, the tightening gun controller may effectively achieve the assembly of the target material by controlling the tightening gun to drive the target socket to tighten the target screw to the target workpiece.

In some embodiments, the method further includes:
when determining, by the control device, that the target socket has not been taken away, not enabling the tightening gun controller but generating alarm information, wherein the alarm information is used to indicate that the target socket has not been taken away.

In this embodiment, the control device may further generate alarm information when determining that the target socket has not been taken away, which can promptly indicate that the target socket has not been taken away and increase the accuracy of socket picking.

In some embodiments of the present application, controlling the socket selector to perform target socket indication processing includes:
controlling an indicator light of a target container to light up to complete the target socket indication processing.

In this embodiment, containers in the socket selector for storing different sockets may be correspondingly provided with indicator lights, so that the control device may, in target socket indication processing, control the indicator light on the target container to light up to prompt taking the socket in the target container, which can effectively increase the accuracy of socket picking.

In some embodiments, the method further includes:
receiving, by the host computer, battery pack barcode information and determining a production formula according to the battery pack barcode information;
and determining, by the host computer, target material picking information according to the production formula and sending the target material picking information to the control device.

In this embodiment, the host computer may, after receiving the battery pack barcode information, determine the production formula corresponding to the received battery pack barcode information based on the received battery pack barcode information, thereby determining a target material that needs to be assembled for this battery pack according to the production formula, generate target material picking information, and send the target material picking information to the control device of the material assembly system, so that the control device of the material assembly system controls a target cabinet door to open according to the target material picking information and controls the socket selector to perform target socket indication processing, to indicate taking correct material and socket, achieving accurate picking and assembly of the material.

In some embodiments of the present application, the material assembly system further includes a human-machine interaction module, and the method further includes:
sending, by the host computer, the production formula and the target material picking information to the human-machine interaction module, to display the production formula and the target material picking information through the human-machine interaction module.

In this embodiment, the host computer may send the production formula and the target material picking information to the human-machine interaction module of the material assembly system, so that the production formula and the target material picking information can be displayed through the human-machine interaction module, enabling visualization of the production formula and the target material picking information.

In some embodiments of the present application, determining the production formula according to the battery pack barcode information includes:
retrieving the production formula corresponding to the battery pack barcode information stored in a server.

In this embodiment, there are various production formulas stored in the server. Therefore, when acquiring a production formula, the host computer retrieves the production formula corresponding to the battery pack barcode information in the server according to the battery pack barcode information. The production formula corresponding to a current battery pack can be accurately acquired, so that accurate material picking and assembly can be performed subsequently according to the accurate production formula.

In some embodiments of the present application, receiving the battery pack barcode information includes:
receiving the battery pack barcode information sent by a barcode scanning gun.

In this embodiment, the battery pack barcode information may be scanned through the barcode scanning gun to obtain the battery pack barcode information, so that the host computer may receive the battery pack barcode information, achieving effective acquisition of the battery pack barcode information.

In a second aspect, an embodiment of the present application provides a material assembly system, including:
a material cabinet, a socket selector, a tightening gun controller, a host computer, and a control device connected to the material cabinet, the socket selector and the tightening gun controller.

The control device is configured to: when receiving target material picking information sent by the host computer, control the material cabinet to open a target cabinet door according to the target material picking information to indicate taking a target material away; control the socket selector to perform target socket indication processing; and when determining that the target socket has been taken away, enable the tightening gun controller, or when determining that the target socket has not been taken away, not enable the tightening gun controller, wherein the target socket indication processing is configured to indicate a target container in the socket selector, the target socket is stored in the target container, and a cabinet body corresponding to the target cabinet door includes the target material.

The tightening gun controller is configured to, when enabled, execute assembly processing of the target material through the target socket if a tightening trigger instruction is received.

In some embodiments of the present application, the material assembly system further includes a human-machine interaction module,
and the human-machine interaction module is configured to display a production formula and the target material picking information.

In some embodiments of the present application, the material assembly system further includes a tightening gun,
and the tightening gun is configured to drive the target socket to complete the assembly processing of the target material, wherein the tightening gun is connected to the target socket.

In some embodiments of the present application, the material assembly system further includes a manual station frame. The manual station frame includes a cross beam assembly and two vertical beams. The vertical beams extend in a vertical direction, and the two vertical beams are spaced apart in a horizontal direction. The material cabinet is provided between the two vertical beams and connected to at least one of the vertical beams. The cross beam assembly connects the two vertical beams and is higher than the material cabinet. The socket selector, the tightening gun controller, the human-machine interaction module, and the tightening gun are all provided on the cross beam assembly.

### Brief Description of the Drawings

FIG. 1 is a schematic diagram I of a compositional structure of a material assembly system according to an embodiment of the present application;
FIG. 2 is a flow chart I of an implementation of a material assembly system according to an embodiment of the present application;
FIG. 3 is a schematic diagram II of the compositional structure of the material assembly system according to an embodiment of the present application;
FIG. 4 is a flow chart II of implementation of the material assembly system according to an embodiment of the present application;
FIG. 5 is a schematic diagram of a production formula according to an embodiment of the present application;
FIG. 6 is a schematic diagram III of the compositional structure of the material assembly system according to an embodiment of the present application;
FIG. 7 is a schematic diagram IV of the compositional structure of the material assembly system according to an embodiment of the present application;
FIG. 8 is a schematic diagram V of the compositional structure of the material assembly system according to an embodiment of the present application;
FIG. 9 is a schematic diagram VI of the compositional structure of the material assembly system according to an embodiment of the present application; and
FIG. 10 is a flow chart III of implementation of the material assembly system according to an embodiment of the present application.

### Detailed Description

The following clearly and completely describes the technical solutions in the embodiments of the present application with reference to the accompanying drawings in the embodiments of the present application. It may be understood that specific embodiments described herein are intended only to explain the relevant application, but not to limit this application. It should also be noted that, for convenience of description, only parts relevant to the related application are shown in the drawings.

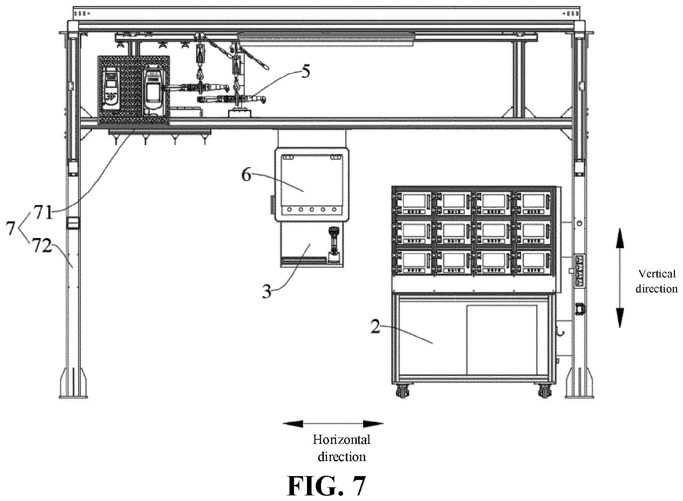

In the description of the embodiments of the invention, the orientation or position relationship of the technical terms "vertical direction" and "horizontal direction" are based on the orientation or position relationship shown in the FIG. 7 and are intended to facilitate the description of the embodiments of the invention and simplify the description only, rather than indicating or implying that the device or element referred to must have a particular orientation or be constructed, operated and used in a particular orientation, and therefore are not to be interpreted as limitations on the embodiments of the invention.

In order to solve the problems in the existing battery pack assembly process , embodiments of the present application provides a material assembly method and system. The material assembly system includes a control device, a material cabinet, a socket selector, a host computer, and a tightening gun controller. The control device may, when receiving target material picking information sent by the host computer, control the material cabinet to open a target cabinet door according to the target material picking information to indicate taking a target material away, and control the socket selector to perform target socket indication processing, wherein the target socket indication processing is used to indicate a target container in the socket selector, the target socket is stored in the target container, and a cabinet body corresponding to the target cabinet door includes the target material. The control device, when determining that the target socket has been taken away, enables the tightening gun controller. The tightening gun controller, when enabled, executes assembly processing of the target material through the target socket if a tightening trigger instruction is received. The control device, when determining that the target socket is not taken, does not enable the tightening gun controller. Therefore, the accuracy of material assembly can be effectively improved.

The following clearly and completely describes the technical solutions in the embodiments of the present application with reference to the accompanying drawings in the embodiments of the present application.

An embodiment of the present application provides a material assembly method, which is applied to a material assembly system.

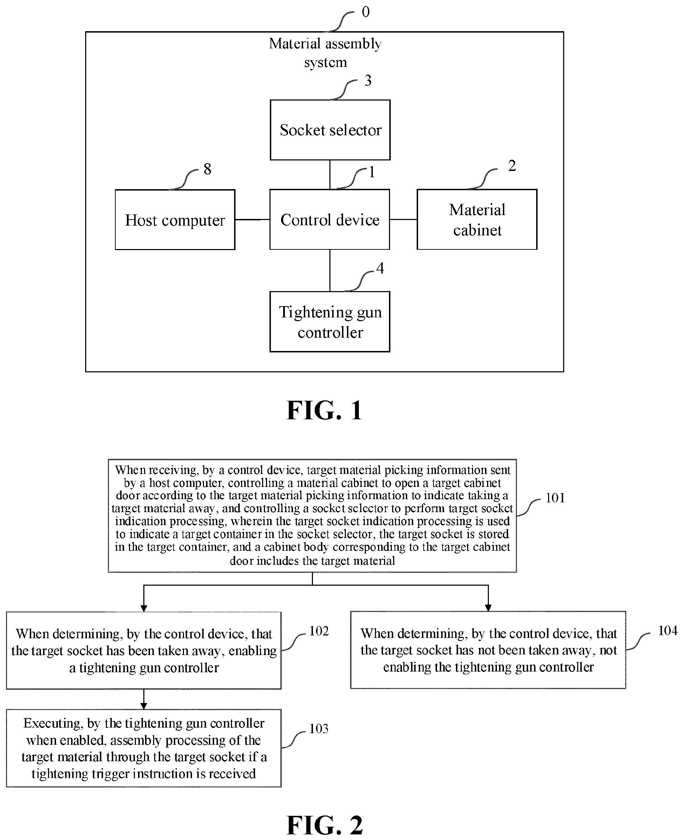

FIG. 1 is a schematic diagram I of a material assembly system according to an embodiment of the present application. As shown in FIG. 1, the material assembly system 0 may include a control device 1, a material cabinet 2, a socket selector 3, a host computer 8, and a tightening gun controller 4, and the control device 1 may be connected to the material cabinet 2, the socket selector 3, and the tightening gun controller 4, wherein:
the control device 1 may be a programmable logic controller (PLC) in the material assembly system 0; and the control device 1 may be used to: when receiving target material picking information sent by the host computer 8, control the material cabinet to open a target cabinet door according to the target material picking information to indicate taking a target material away; control the socket selector to perform target socket indication processing, wherein the target socket indication processing is used to indicate a target container in the socket selector, the target socket is stored in the target container, and a cabinet body corresponding to the target cabinet door includes the target material; and when determining that the target socket has been taken away, enable the tightening gun controller to complete assembly processing of the target material based on the tightening gun controller. The material cabinet 2 may be used to store a material. The socket selector 3 may be used to store a socket. The tightening gun controller 4 may be used to execute a tightening operation to complete the assembly processing of the target material.

In an embodiment of the present application, FIG. 2 is a flow chart I of implementation of a material assembly system according to an embodiment of the present application. As shown in FIG. 2, a method for the material assembly system to execute a material assembly operation may include the following steps.

In step 101, the control device, when receiving target material picking information sent by the host computer, control the material cabinet to open a target cabinet door according to the target material picking information to indicate taking a target material away, and control the socket selector to perform target socket indication processing, wherein the target socket indication processing is used to indicate a target container in the socket selector, the target socket is stored in the target container, and a cabinet body corresponding to the target cabinet door includes the target material.

In an embodiment of the present application, the control device may first, when receiving target material picking information sent by the host computer, control the material cabinet to open a target cabinet door according to the target material picking information to indicate taking a target material away, and controlling the socket selector to perform target socket indication processing, wherein the target socket indication processing is used to indicate a target container in the socket selector, the target socket is stored in the target container, and a cabinet body corresponding to the target cabinet door includes the target material.

It should be noted that in an embodiment of the present application, the host computer may determine the target material picking information and send the target material picking information to the control device.

In some embodiments of the present application, the host computer may determine the target material picking information based on the battery pack barcode information by receiving the battery pack barcode information transmitted by a barcode scanning gun.

In some embodiments of the present application, the target material picking information may at least include target cabinet door indication information and target socket indication information.

Illustratively, the target cabinet door indication information in the target material picking information is a No. 3 cabinet door, and the target socket indication information is a No. 2 socket. Therefore, the control device, after receiving the above target material picking information, may control the No. 3 cabinet door in the cabinet to open, and control the socket selector to perform indication processing of the No. 2 socket to indicate an operator to take the target material from the No. 3 cabinet door and take the No. 2 socket.

It should be noted that in an embodiment of the present application, the material cabinet may include a plurality of cabinet doors, and a cabinet body corresponding to each cabinet door may be used to store a different material. The target cabinet door is one cabinet door of the plurality of cabinet doors of the material cabinet. The target material is a material in the cabinet body corresponding to the target cabinet door.

It should be noted that in an embodiment of the present application, the socket selector may include a plurality of sockets and a plurality of containers loaded with sockets, and each container is loaded with a different socket inside. The target container is one container of the plurality of containers. The target socket is a socket loaded in the target container.

In some embodiments of the present application, when controlling the socket selector to perform target socket indication processing, the control device may control an indicator light of the target container to light up, thereby completing the target socket indication processing.

Illustratively, the target socket is a No. 2 socket, and the control device may control an indicator light on a No. 2 container (the target container) loaded with the No. 2 socket in the socket selector to light up, and may thus indicate the operator to take the No. 2 socket from the No. 2 container.

It may be seen that in an embodiment of the present application, the control device controls opening of the target cabinet door and the target socket indication processing according to the target material picking information. Accurate indication for a target material and a target socket can be achieved, thereby allowing the operator to accurately take materials and sockets required for a currently executed material assembly task, and avoiding manual assembly errors. Even in an assembly scenario of mixed-line production of multiple products, accurate assembly can be achieved, effectively improving accuracy of material assembly.

In step 102, the control device, when determining that the target socket has been taken away, enables the tightening gun controller.

In an embodiment of the present application, the control device, after receiving the target material picking information sent by the host computer, controls the material cabinet to open the target cabinet door according to the target material picking information to indicate taking the target material away, and may, when determining that the target socket has been taken away, enables the tightening gun controller after controlling the socket selector to perform target socket indication processing.

It may be understood that in an embodiment of the present application, the tightening gun controller can only work when enabled, so in a manner that the tightening gun controller is enabled only when determining that the target socket has been taken away, the control device can avoid the situation where the tightening gun controller performs tightening and assembly based on an incorrect socket, and improves accuracy of material assembly.

In some embodiments of the present application, the control device may detect whether the target socket has been taken through a sensor in the target container, wherein the type of the sensor is not limited in the present application, for example, the sensor may be a grating sensor.

In step 103, the tightening gun controller when enabled executes assembly processing of the target material through the target socket if a tightening trigger instruction is received.

In an embodiment of the present application, after the control device, when determining that the target socket has been taken away, enables the tightening gun controller, the tightening gun controller when enabled then executes assembly processing of the target material through the target socket if a tightening trigger command is received.

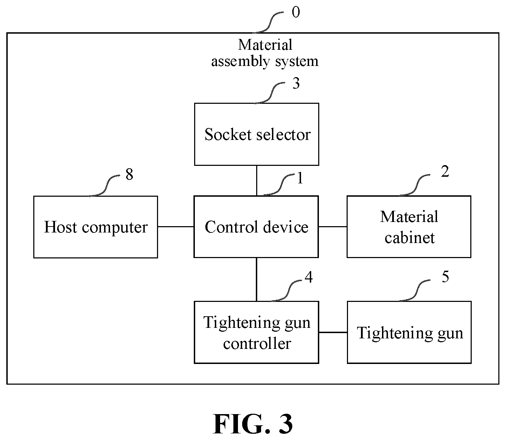

Based on the above embodiment, in another embodiment of the present application, as shown in FIG. 3, the material assembly system may further include a tightening gun 5, wherein the tightening gun 5 may be used to drive the target socket to perform a tightening operation.

It should be noted that in an embodiment of the present application, the tightening gun controller performs the tightening operation to complete the assembly processing of the target material only when enabled and receiving a tightening trigger instruction.

In some embodiments of the present application, a trigger form of the tightening trigger instruction is not limited in the present application. For example, the material assembly system includes a preset button therein. When the tightening gun controller is enabled, the operator presses the preset button, and the tightening gun controller, after receiving operation information corresponding to the preset button, may determine that the tightening trigger command is received, and then start the tightening operation to complete assembly processing of the target material.

It should be noted that in an embodiment of the present application, the tightening gun controller may complete the tightening operation of the target material based on the target socket, thereby completing assembly of the target material.

In some embodiments of the present application, the tightening gun controller, when executing assembly processing of the target material through the target socket, may control the tightening gun to drive the target socket to complete assembly processing of the target material, wherein the tightening gun is connected to the target socket.

In some embodiments of the present application, the target material may include a target screw and a target workpiece, and the target socket is connected to the target screw. When performing assembly processing on the target material, the tightening gun controller may complete the assembly processing of the target material by driving the target socket to execute a tightening operation between the target screw and the target workpiece.

That is, in an embodiment of the present application, the tightening gun controller controls the tightening gun, and since the tightening gun is connected to the target socket, the target socket may be used to tighten the target screw, so that the tightening gun controller may complete the assembly processing of the target material by controlling the tightening gun to drive the target socket to tighten the target screw to the target workpiece.

In step 104, the control device, when determining that the target socket has not been taken away, does not enable the tightening gun controller.

In an embodiment of the present application, the control device controls the material cabinet to open the target cabinet door according to the target material picking information to indicate taking the target material away, and, when determining that the target socket has not been taken away, does not enable the tightening gun controller after controlling the socket selector to perform target socket indication processing.

In some embodiments of the embodiments of the present application, the control device may, when determining that the target socket has not been taken away, not enable the tightening gun controller but generate alarm information, wherein the alarm information is used to indicate that the target socket has not been taken away.

In an embodiment of the present application, the specific form of the alarm information is not limited in the present application. For example, the alarm information may be sound information, or text information or image information displayed through a human-machine interaction module.

In some embodiments of the present application, by generating alarm information, it may be indicated that the correct target socket has not been taken away, so that an operator may retake the correct target socket.

It may be understood that the tightening gun controller when not enabled will not respond to a start signal and cannot execute a tightening operation.

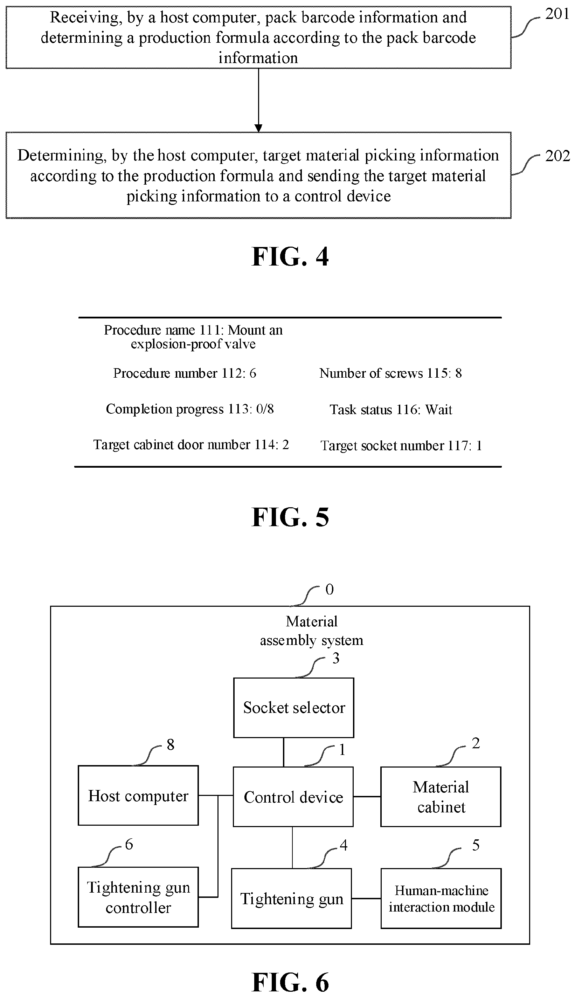

In an embodiment of the present application, as shown in FIG. 4, the material assembly method of the material assembly system may also include the following steps.
in step 201, the host computer receives battery pack barcode information and determines a production formula according to the battery pack barcode information.

In an embodiment of the present application, the host computer receives the battery pack barcode information and determines the production formula according to the battery pack barcode information.

In some embodiments of the present application, the host computer, when receiving the battery pack barcode information, may receive the battery pack barcode information sent by a barcode scanning gun.

It should be noted that in an embodiment of the present application, the battery pack barcode information may be obtained through the barcode scanning gun. The barcode scanning gun scans barcode information on a battery pack to obtain the battery pack barcode information, thereby transmitting the battery pack barcode information to the host computer.

Illustratively, an operator takes the barcode scanning gun to scan the barcode information on the battery pack. In turn, the barcode scanning gun, after obtaining the battery pack barcode information, may transmit the battery pack barcode information to the host computer. The host computer may determine the production formula according to the battery pack barcode information.

It should also be noted that in an embodiment of the present application, the production formula may include relevant information for a material assembly operation that needs to be performed for this battery pack currently.

In some embodiments of the present application, the host computer, after receiving the battery pack barcode information and determining the production formula according to the battery pack barcode information, may further send the production formula to a human-machine interaction module to display the production formula via the human-machine interaction module.

In some embodiments of the present application, the human-machine interaction module may be a human machine interface (HMI).

Illustratively, as shown in FIG. 5, the production formula displayed via the HMI (human-machine interaction module) may include a procedure name 111, a procedure number 112, completion progress 113, a target cabinet door number 114, a number of screws 115, a task status 116, and a target socket number 117 which correspond to a currently executed material assembly operation, wherein the procedure name 111 is Mount an explosion-proof valve, that is, the material assembly operation that needs to be executed currently is to mount the explosion-proof valve, the procedure number 112 corresponding to an explosion-proof valve mounting procedure is No. 6, the completion progress 113 of the explosion-proof valve installation procedure is currently 0, indicating that it has not begun yet, the total progress is 8 (the progress in this embodiment corresponds to the number of screws 8), the target cabinet door number 114 is No. 2, the number of screws 115 is 8, indicating that 8 screws need to be taken from a material loaded in a cabinet body with a No. 2 cabinet door, the task status 116 is WAIT, and the target socket number 117 is No. 1, indicating that the target socket required for a current explosion-proof valve mounting procedure is a No. 1 socket.

In step 202, the host computer determines target material picking information according to the production formula and sends the target material picking information to the control device.

In an embodiment of the present application, the host computer, after receiving the battery pack barcode information and determining the production formula based on the battery pack barcode information, may determine the target material picking information based on the production formula, and send the target material picking information to the control device.

In some embodiments of the present application, the host computer may determine the target material picking information according to the production formula, including: determining a target cabinet door corresponding to a target material according to the production formula, and generating target cabinet door indication information; and determining a target container where a target socket is located, generating target socket indication information, thereby obtaining the target material picking information based on the target cabinet door indication information and the target socket indication information, and sending the target material picking information to the control device in the material assembly system.

In an embodiment of the present application, the host computer may further send the target material picking information to the human-machine interaction module to display the target material picking information via the human-machine interaction module. For example, the human-machine interaction module is an HMI, and the host computer may send the target material picking information to the HMI to display the target material picking information through the HMI.

That is, in an embodiment of the present application, the host computer may send the production formula and the target material picking information to the human-machine interaction module, to display the production formula and the target material picking information through the human-machine interaction module.

In some embodiments of the present application, the host computer, when determining a production formula according to the battery pack barcode information, may retrieve the production formula corresponding to the battery pack barcode information stored in the server.

It should be noted that in an embodiment of the present application, the server may be a pull wire server in a battery pack assembly line. Production formulas corresponding to individual battery packs are stored in the server, and the production formulas are all stored according to the corresponding battery pack barcode information. Therefore, the host computer, when acquiring the battery pack barcode information, may retrieve the corresponding production formula from the server according to the battery pack barcode information.

In an embodiment of the present application, the control device of the material assembly system may determine the target cabinet door and the target socket according to the target material picking information sent by the host computer, may thus control the material cabinet to automatically open the target cabinet door, a material behind the target cabinet door being the correct target material, and may thus indicate taking the correct material away. At the same time, target socket indication processing is performed to indicate taking the correct target socket away, the target socket being the correct socket used when assembling the target material. In turn, the control device may further judge whether the target socket has been taken away. Only when the target socket has been taken away, will the tightening gun controller be enabled to complete assembly of the target material based on the tightening gun controller. Accordingly, accurate picking and assembly of the material may be achieved, greatly improving accuracy of material assembly, and thereby improving assembly efficiency. Additionally, if the control device determines that the target socket has not been taken away, for example, a socket that is taken away is not the target socket, i.e., when the socket is incorrectly taken away, the control device will not enable the tightening gun controller and the assembly of the material then cannot be completed through the tightening gun controller. This can effectively increase the accuracy of socket picking. And only when the tightening gun controller is enabled and receives a tightening trigger instruction, can assembly processing of the target material be executed through the target socket, enabling effective improvement in efficiency of material assembly.

Based on the above embodiments, in another embodiment of the present application, there is provided a material assembly system. As shown in FIG. 6, the material assembly system 0 may include a control device 1, a material cabinet 2, a socket selector 3, a tightening gun controller 4, a tightening gun 5, a human-machine interaction module 6, and a host computer 8, wherein the control device 1 may be connected to the material cabinet 2, the socket selector 3, the tightening gun controller 4, the human-computer interaction module 6, and the host computer 8.

In an embodiment of the present application, the control device 1 is configured to: when receiving target material picking information sent by the host computer, control the material cabinet to open a target cabinet door according to the target material picking information to indicate taking a target material away; control the socket selector to perform target socket indication processing; and when determining that the target socket has been taken away, enable the tightening gun controller, or when determining that the target socket has not been taken away, not enable the tightening gun controller, with the target socket indication processing configured to indicate a target container in the socket selector, the target socket stored in the target container, and a cabinet body corresponding to the target cabinet door including the target material.

In some embodiments of the present application, the control device 1 may further be configured to, when determining that the target socket has not been taken away, not enable the tightening gun controller but generate alarm information, wherein the alarm information is configured to indicate that the target socket has not been taken away.

In some embodiments of the present application, the control device 1 may further be configured to control an indicator light of a target container to light up to complete the target socket indication processing.

In an embodiment of the present application, the material cabinet 2 may be configured to store a material.

In an embodiment of the present application, the socket selector 3 may be configured to store a socket.

In an embodiment of the present application, the tightening gun controller 4 may be configured to execute a tightening operation.

In an embodiment of the present application, the human-machine interaction module 6 may be configured to display a production formula and target material picking information.

In some embodiments of the present application, the tightening gun controller 4 may be configured to, when enabled, execute assembly processing of the target material through the target socket if a tightening trigger instruction is received.

In some embodiments of the present application, the tightening gun controller 4 may be configured to control the tightening gun to drive the target socket to complete assembly processing of the target material, wherein the tightening gun is connected to the target socket.

In some embodiments of the present application, the target material includes a target screw and a target workpiece, and the target socket is connected to the target screw. The tightening gun controller 4 may further complete assembly processing of the target material by controlling the tightening gun to drive the target socket to execute a tightening operation between the target screw and the target workpiece.

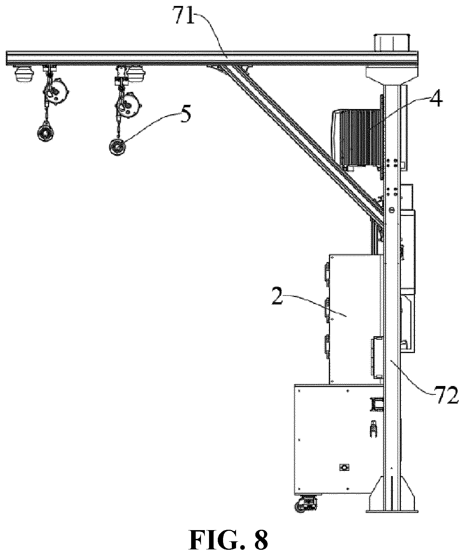

In some embodiments of the present application, with reference to FIGS. 7 and 8, the material assembly system further includes a manual station frame 7. The manual station frame 7 includes a cross beam assembly 71 and two vertical beams 72. The vertical beams 72 extend in a vertical direction, and the two vertical beams 72 are spaced apart in a horizontal direction. The material cabinet 2 is provided between the two vertical beams 72 and connected to at least one of the vertical beams 72. The cross beam assembly 71 connects the two vertical beams 72 and is higher than the material cabinet 2. The socket selector 3, the tightening gun controller 4, the tightening gun 5, and the human-machine interaction module 6 are all provided on the cross beam assembly 71.

The vertical direction refers to a gravitational direction.

With the cross beam assembly 71 connecting the two vertical beams 72, stability and structural strength of the entire manual station frame 7 are improved. The material cabinet 2 is connected to the manual station frame 7 so that the material cabinet 2 is kept stable. The socket selector 3, the tightening gun controller 4, the human-machine interaction module 6, and the tightening gun 5 are provided on the cross beam assembly 71, so that it is convenient for a person to pick and place which is ergonomic. Further, the socket selector 3, the tightening gun controller 4, the human-machine interaction module 6, and the tightening gun 5 are kept away from the ground, which reduces the probability of direct impact due to worker movement, material handling, etc.

In some embodiments, referring to FIG. 7, the human-machine interaction module 6 is suspended below the cross beam assembly 71 so that the human-machine interaction module 6 can be roughly flush with a worker, improving operational convenience.

It may be understood that the vertical beams 72 are fixed to the ground through foundation bolts.

In some embodiments, referring to FIG. 7, the cross beam assembly 71 extends in the horizontal direction so that stability of placement of the socket selector 3, the tightening gun controller 4, the human-machine interaction module 6, and the tightening gun 5 is kept.

The horizontal direction refers to a direction perpendicular to the vertical direction.

In some embodiments, referring to FIG. 7, the material cabinet 2 is located between the two vertical beams 72. That is, the manual station frame 7 is provided across over the material cabinet 2. In this way, footprint of the material assembly system is effectively reduced and compactness of the overall structure of the material assembly system is improved.

In an embodiment of the present application, the host computer 8 may be configured to: receive battery pack barcode information and determine a production formula according to the battery pack barcode information; and determine target material picking information according to the production formula and send the target material picking information to the control device, so that the control device controls the material cabinet to open a target cabinet door according to the target material picking information, controls the socket selector to perform target socket indication processing, and, when determining that the target socket has been taken away, enables the tightening gun controller to complete assembly processing of the target material based on the tightening gun controller.

In an embodiment of the present application, the host computer 8 may further be configured to send the production formula and the target material picking information to the human-machine interaction module, to display the production formula and the target material picking information through the human-machine interaction module.

In an embodiment of the present application, the host computer 8 may further be configured to retrieve the production formula corresponding to the battery pack barcode information stored in a server.

In an embodiment of the present application, the host computer 8 may further be configured to receive the battery pack barcode information sent by a barcode scanning gun.

In an embodiment of the present application, there is provided a material assembly system. The material assembly system includes a control device, a material cabinet, a socket selector, a tightening gun controller, a tightening gun, a human-machine interaction module, and a host computer. The control device of the material assembly system may determine a target cabinet door and a target socket according to target material picking information sent by the host computer, may thus control the material cabinet to automatically open the target cabinet door, a material behind the target cabinet door being the correct target material, and may thus indicate taking the correct material away. At the same time, target socket indication processing is performed to indicate taking the correct target socket away, the target socket being the correct socket used when assembling the target material. In turn, the control device may further judge whether the target socket has been taken away. Only when the target socket has been taken away, will the tightening gun controller be enabled to complete assembly of the target material based on the tightening gun controller. Accordingly, accurate picking and assembly of the material may be achieved, greatly improving accuracy of material assembly, and thereby improving assembly efficiency. Additionally, if the control device determines that the target socket has not been taken away, for example, a socket that is taken away is not the target socket, i.e., when the socket is incorrectly taken away, the control device will not enable the tightening gun controller and the assembly of the material then cannot be completed through the tightening gun controller. This can effectively increase the accuracy of socket picking. And only when the tightening gun controller is enabled and receives a tightening trigger instruction, can assembly processing of the target material be executed through the target socket, enabling effective improvement in efficiency of material assembly.

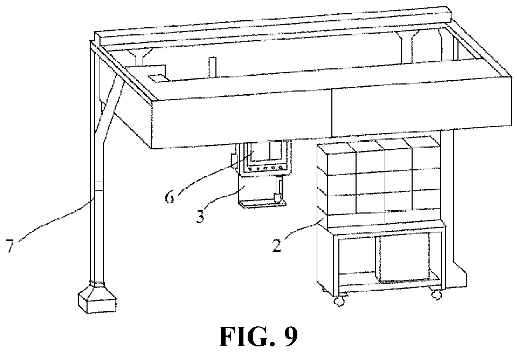

Based on the above embodiments, in another embodiment of the present application, Illustratively, a front view perspective of the material assembly system is shown as in FIG. 7. The material assembly system includes a material cabinet 2, a human-machine interaction module (HMI) 6, a socket selector 3, a tightening gun 5, and a manual station frame 7. A side view of the material assembly system is shown as in FIG. 8. The material assembly system includes a tightening gun controller 4. A three-dimensional isometric view of the material assembly system is shown as in FIG. 9. The material assembly system includes a material cabinet 2, a human-machine interaction module 6, a socket selector 3, and a manual station frame 7.

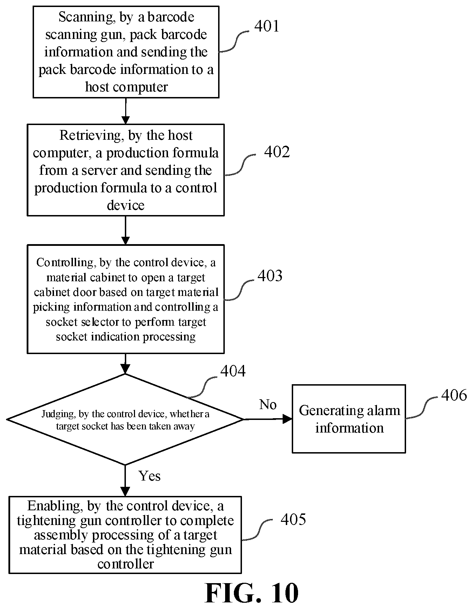

In an embodiment of the present application, FIG. 10 is a flow chart III of implementation of the material assembly system according to an embodiment of the present application. As shown in FIG. 10, the following steps may be included.

In step 401, a barcode scanning gun scans battery pack barcode information and sends the battery pack barcode information to a host computer.

In step 402, the host computer retrieves a production formula from a server and sends the production formula to a control device.

In step 403, the control device controls a material cabinet to open a target cabinet door based on target material picking information and controls a socket selector to perform target socket indication processing.

In step 404, the control device judges whether a target socket has been taken away.

In this embodiment, if the control device judges that the target socket has been taken away, step 405 is executed, and if it judges that the target socket has not been taken away, step 406 is executed.

In step 405, the control device enables a tightening gun controller to complete assembly processing of a target material based on the tightening gun controller.

In step 406, alarm information is generated.

In this embodiment, the control device may generate the alarm information to indicate an operator to retake the correct target socket. Further, after step 406, the control device may again judge whether the target socket has been taken away, that is, execute step 404. If it has been taken away, that is, the operator retakes the correct target socket, then executing step 405 may be continued.

In some embodiments of the present application, the host computer may determine the target material picking information based on the battery pack barcode information by receiving the battery pack barcode information transmitted by a barcode scanning gun.

Illustratively, the operator may take the barcode scanning gun to scan the barcode information on a battery pack. In turn, the barcode scanning gun, after obtaining the battery pack barcode information, may transmit the battery pack barcode information to the host computer. The host computer may determine the production formula according to the battery pack barcode information.

It should be noted that in an embodiment of the present application, the production formula may include relevant information for a material assembly operation that needs to be performed for this battery pack currently.

In some embodiments of the present application, the host computer may determine the target material picking information according to the production formula, including: determining a target cabinet door corresponding to a target material according to the production formula, and generating target cabinet door indication information; and determining a target container where a target socket is located, generating target socket indication information, thereby obtaining the target material picking information based on the target cabinet door indication information and the target socket indication information, and sending the target material picking information to the control device in the material assembly system.

In some embodiments of the present application, the host computer, after receiving the battery pack barcode information and determining the production formula according to the battery pack barcode information, may further send the production formula to a human-machine interaction module to display the production formula via the human-machine interaction module.

In some embodiments of the present application, the host computer may further send the target material picking information to the human-machine interaction module, to display the target material picking information through the human-machine interaction module.

In some embodiments of the present application, the host computer, when determining a production formula according to the battery pack barcode information, may retrieve the production formula corresponding to the battery pack barcode information stored in the server, wherein the server may be a pull wire server in a battery pack assembly line.

In some embodiments of the present application, the target material picking information may at least include target cabinet door indication information and target socket indication information.

In an embodiment of the present application, the material cabinet may include a plurality of cabinet doors, and a cabinet body corresponding to each cabinet door may be used to store a different material. The target cabinet door is one cabinet door of the plurality of cabinet doors of the material cabinet. The target material is a material in the cabinet body corresponding to the target cabinet door.

In an embodiment of the present application, the socket selector may include a plurality of sockets and a plurality of containers loaded with sockets, and each container is loaded with a different socket inside. The target container is one container of the plurality of containers. The target socket is a socket loaded in the target container.

In an embodiment of the present application, the control device may control the socket selector to perform target socket indication processing, e.g., may control an indicator light of the target container to light up, thereby completing the target socket indication processing.

In an embodiment of the present application, the tightening gun controller can only work when enabled, so in a manner that the tightening gun controller is enabled only when determining that the target socket has been taken away, the control device can avoid the situation where the tightening gun controller performs tightening and assembly based on an incorrect socket, and improves accuracy of material assembly.

In an embodiment of the present application, after controlling the socket selector to perform the target socket indication processing, the control device, when determining that the target socket has not been taken away, does not enable the tightening gun controller but generates alarm information, wherein the alarm information is used to indicate that the target socket has not been taken away.

It may be understood that in an embodiment of the present application, the tightening gun controller when not enabled will not respond to a start signal and cannot execute a tightening operation.

It may also be understood that in an embodiment of the present application, by generating the alarm information, it may be indicated that the correct target socket has not been taken away, so that an operator may retake the correct target socket.

In some embodiments of the present application, the tightening gun controller, when enabled, may execute assembly processing of the target material through the target socket if a tightening trigger instruction is received.

In some embodiments of the present application, a trigger form of the tightening trigger instruction is not limited in the present application. For example, the material assembly system includes a preset button therein. When the tightening gun controller is enabled, the operator presses the preset button, and the tightening gun controller, after receiving operation information corresponding to the preset button, may determine that the tightening trigger command is received, and then start the tightening operation to complete assembly processing of the target material.

In some embodiments of the present application, the tightening gun controller may control the tightening gun to drive the target socket to complete assembly processing of the target material.

In some embodiments of the present application, the target material may include a target screw and a target workpiece, and the target socket is connected to the target screw. When performing assembly processing on the target material, the tightening gun controller may complete the assembly processing of the target material by driving the target socket to execute a tightening operation between the target screw and the target workpiece.

In an embodiment of the present application, there is provided a material assembly method. A control device in the material assembly system may: when receiving target material picking information sent by a host computer, control a material cabinet to open a target cabinet door according to the target material picking information to indicate taking a target material away; control a socket selector to perform target socket indication processing, wherein the target socket indication processing is used to indicate a target container in the socket selector, the target socket is stored in the target container, and a cabinet body corresponding to the target cabinet door includes the target material; and when determining that the target socket has been taken away, enable a tightening gun controller to complete assembly processing of the target material based on the tightening gun controller. The host computer may receive battery pack barcode information and determine a production formula based on the battery pack barcode information, and determine target material picking information based on the production formula and send the target material picking information to the control device. The tightening gun controller may, when enabled, execute assembly processing of the target material through the target socket if a tightening trigger instruction is received. It may be seen that the host computer may determine the target material picking information according to the production formula, and send the target material picking information to the control device, and in turn, the control device may determine the target cabinet door and the target socket according to the target material picking information, may thus control the material cabinet to automatically open the target cabinet door, a material behind the target cabinet door being the correct target material, and may thus indicate taking the correct material away. At the same time, target socket indication processing is performed to indicate taking the correct target socket away, the target socket being the correct socket used when assembling the target material. In turn, the control device may further judge whether the target socket has been taken away. Only when the target socket has been taken away, will the tightening gun controller be enabled to complete assembly of the target material based on the tightening gun controller. Accordingly, accurate picking and assembly of the material may be achieved, greatly improving accuracy of material assembly, and thereby improving assembly efficiency.

Those skilled in the art should understand that the embodiments of the present application may be provided as a method, system, or computer program product. Therefore, the present application may use a form of hardware embodiments, software embodiments, or embodiments with a combination of software and hardware.

The foregoing descriptions are merely preferred embodiments of the present application, but are not intended to limit the protection scope of the present application.

## Claims

1. A material assembly method applied to a material assembly system, the material assembly system comprising a control device, a material cabinet, a socket selector, a host computer, and a tightening gun controller, the method comprising:
when receiving, by the control device, target material picking information sent by the host computer, controlling the material cabinet to open a target cabinet door according to the target material picking information to indicate taking a target material away, and controlling the socket selector to perform target socket indication processing, wherein the target socket indication processing is used to indicate a target container in the socket selector, the target socket is stored in the target container, and a cabinet body corresponding to the target cabinet door includes the target material;
when determining, by the control device, that the target socket has been taken away, enabling the tightening gun controller;
executing, by the tightening gun controller when enabled, assembly processing of the target material through the target socket if a tightening trigger instruction is received; and
when determining, by the control device, that the target socket has not been taken away, not enabling the tightening gun controller.

2. The material assembly method according to claim 1, wherein the material assembly system comprises a tightening gun, and executing assembly processing of the target material through the target socket comprises:
controlling the tightening gun to drive the target socket to complete the assembly processing of the target material, wherein the tightening gun is connected to the target socket.

3. The material assembly method according to claim 1 or 2, wherein the target material comprises a target screw and a target workpiece, the target socket is connected to the target screw, and controlling the tightening gun to drive the target socket to complete the assembly processing of the target material further comprises:
completing the assembly processing of the target material by controlling the tightening gun to drive the target socket to execute a tightening operation between the target screw and the target workpiece.

4. The material assembly method according to any one of claims 1 to 3, wherein the method further comprises:
when determining, by the control device, that the target socket has not been taken away, not enabling the tightening gun controller but generating alarm information, wherein the alarm information is used to indicate that the target socket has not been taken away.

5. The material assembly method according to claim 4, wherein controlling the socket selector to perform the target socket indication processing comprises:
controlling an indicator light of the target container to light up to complete the target socket indication processing.

6. The material assembly method according to any one of claims 1 to 5, wherein the method further comprises:
receiving, by the host computer, battery pack barcode information and determining a production formula according to the battery pack barcode information; and
determining, by the host computer, target material picking information according to the production formula and sending the target material picking information to the control device.

7. The material assembly method according to claim 6, wherein the material assembly system further comprises a human-machine interaction module, and the method further comprises:
sending, by the host computer, the production formula and the target material picking information to the human-machine interaction module, to display the production formula and the target material picking information through the human-machine interaction module.

8. The material assembly method according to claim 6 or 7, wherein determining the production formula according to the battery pack barcode information comprises:
retrieving the production formula corresponding to the battery pack barcode information stored in a server.

9. The material assembly method according to any one of claims 6 to 8, wherein receiving the battery pack barcode information comprises:
receiving the battery pack barcode information sent by a barcode scanning gun.

10. A material assembly system, comprising:
a material cabinet, a socket selector, a tightening gun controller, a host computer, and a control device connected to the material cabinet, the socket selector and the tightening gun controller;
the control device being configured to: when receiving target material picking information sent by the host computer, control the material cabinet to open a target cabinet door according to the target material picking information to indicate taking a target material away; control the socket selector to perform target socket indication processing; and when determining that the target socket has been taken away, enable the tightening gun controller, or when determining that the target socket has not been taken away, not enable the tightening gun controller, wherein the target socket indication processing is configured to indicate a target container in the socket selector, the target socket is stored in the target container, and a cabinet body corresponding to the target cabinet door comprises the target material;
the tightening gun controller being configured to, when enabled, execute assembly processing of the target material through the target socket if a tightening trigger instruction is received.

11. The material assembly system according to claim 10, wherein the material assembly system further comprises a human-machine interaction module,
and the human-machine interaction module is configured to display a production formula and the target material picking information.

12. The material assembly system according to claim 11, wherein the material assembly system further comprises a tightening gun,
and the tightening gun is configured to drive the target socket to complete assembly processing of the target material, wherein the tightening gun is connected to the target socket.

13. The material assembly system according to claim 11 or 12, wherein the material assembly system further comprises a manual station frame, the manual station frame comprises a cross beam assembly and two vertical beams, the vertical beams extend in a vertical direction and the two vertical beams are spaced apart in a horizontal direction, the material cabinet is provided between the two vertical beams and connected to at least one of the vertical beams, the cross beam assembly connects the two vertical beams and is higher than the material cabinet, and the socket selector, the tightening gun controller, the human-machine interaction module, and the tightening gun are all provided on the cross beam assembly.
